(19) Europäisches Patentamt / European Patent Office / Office européen des brevets

(11) **EP 2 694 317 B1**

(12) **FASCICULE DE BREVET EUROPEEN**

(45) Date de publication et mention de la délivrance du brevet:
**15.05.2019 Bulletin 2019/20**

(21) Numéro de dépôt: **12717342.5**

(22) Date de dépôt: **30.03.2012**

(51) Int Cl.:
*B60K 35/00* (2006.01)   *G02B 5/04* (2006.01)
*G02F 1/13357* (2006.01)

(86) Numéro de dépôt international:
**PCT/FR2012/000121**

(87) Numéro de publication internationale:
**WO 2012/131196 (04.10.2012 Gazette 2012/40)**

(54) **MODULE DE COMMANDE ET D'AFFICHAGE POUR VÉHICULE AUTOMOBILE**

STEUERUNG UND ANZEIGEMODUL FÜR EIN KRAFTFAHRZEUG

CONTROL AND DISPLAY MODULE FOR A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.04.2011 FR 1100991**

(43) Date de publication de la demande:
**12.02.2014 Bulletin 2014/07**

(73) Titulaire: **Valeo Systemes Thermiques**
**78320 Le Mesnil Saint Denis (FR)**

(72) Inventeurs:
• **THORAILLER, Maryline**
  **F-94490 Ormesson sur Marne (FR)**
• **BERAUD, Henry**
  **F-94300 Vincennes (FR)**
• **IRZYK, Michael**
  **F-77000 Melun (FR)**
• **GIROD, Vincent**
  **F-75012 Paris (FR)**

(74) Mandataire: **Pothmann, Karsten**
**Valeo Etudes Electroniques**
**Service Propriété Industrielle**
**76 rue Auguste Perret - ZI Europarc**
**94046 Creteil Cedex (FR)**

(56) Documents cités:
**WO-A1-2005/003851      US-A1- 2005 276 448**
**US-A1- 2010 026 703      US-A1- 2012 044 440**

**Description**

*Domaine technique de l'invention*

La présente invention concerne un module de commande et d'affichage pour véhicule automobile comportant une dalle tactile.

Il est connu de munir les véhicules automobiles, par exemple dans une zone centrale de leur planche de bord, d'un module de commande et d'affichage permettant d'afficher des informations et de commander des fonctions de climatisation, d'un système audio, d'un système de téléphonie, d'un système multimédia ou encore d'un système de navigation.

Les documents US 2010/026703 A et US 2005/276448 A divulguent le préambule de la revendication 1.

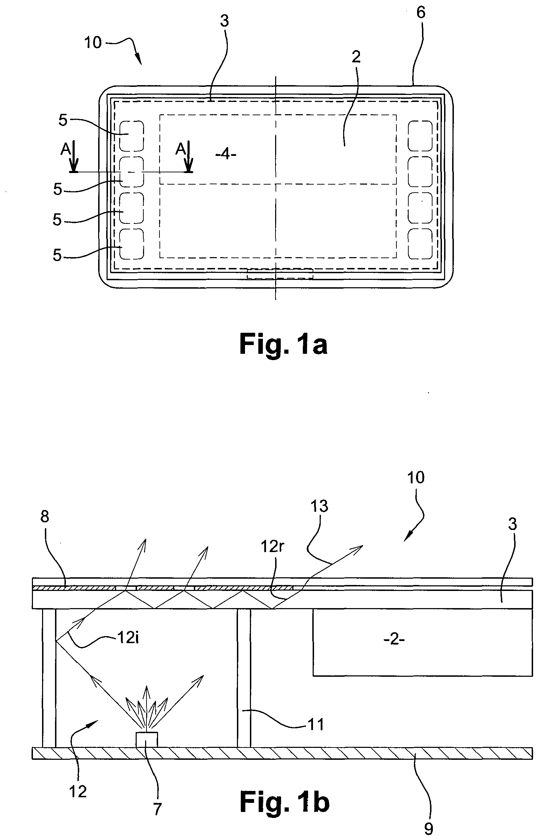

La figure 1a représente une vue schématique de face d'un module 10 pour véhicule automobile. Le module 10 comporte un écran d'affichage 2, pour l'affichage des données d'information ou de commande, une dalle tactile transparente 3 recouvrant l'écran d'affichage 2 et présentant au moins une surface de commande 4 pour la saisie de commande par un utilisateur par de simples contacts avec l'écran, et un boîtier 5 dans lequel sont logés l'écran d'affichage 2 et la dalle tactile 3.

L'écran d'affichage 2 et la dalle tactile 3 permettent ainsi la saisie de commande et l'affichage de données correspondantes. En complément de l'écran d'affichage 2, et en bordure de celui-ci, le module 10 peut également comporter des zones de commande tactile 5 adaptées pour être rétro éclairée par une source lumineuse 7 (figure 1b).

Le rétroéclairage des zones de commande tactile 5 permet alors de simuler des boutons de commande pouvant être visualisés en conduite de jour ou de nuit.

De tels boutons de commande sont réalisés par l'ajout d'un film opaque 8 sur la dalle tactile 3, le film opaque comportant des pictogrammes, transparents ou translucides au dessus des zones de commande tactile 5 apte à laisser passer un faisceau lumineux contrairement au reste du film opaque.

En regard des zones de commande tactile 5 et en face arrière de la dalle tactile 3, les pictogrammes transparents sont éclairés de manière homogène par une source lumineuse diffuse 7, par exemple par une ou plusieurs diodes électroluminescentes (DEL en abrégé) implantées dans un support de type carte électronique 9 et éventuellement guidé par guide de lumière 11.

La source de lumière 7 étant diffuse, elle forme un large faisceau de rayons lumineux 12 comportant des rayons lumineux de forte inclinaison par rapport à la normale de la source lumineuse. A cet effet, des rayons incidents 12i arrivent au niveau de l'interface de la dalle tactile 3 (formant un premier dioptre) avec un angle d'incidence tel que les rayons réfractés 12r à l'intérieur de la dalle tactile ont un angle supérieur à l'angle de réflexion totale les empêchant de franchir le second dioptre formé par la seconde interface de la dalle tactile 3 avec l'air ambiant.

Une partie des rayons lumineux se propagent alors à l'intérieur de la dalle tactile transparente 3, et peuvent être réfractés sans maîtrise à l'extérieur de la dalle tactile par la présence de défauts ou d'impuretés sur la dalle tactile 3.

Dans certaines conditions, par exemple de nuit et lorsque l'écran d'affichage 2 est éteint, ces fuites de lumière non maîtrisées peuvent occasionner un éclairage perturbateur et non voulu du module de commande et d'affichage, gênant la perception de l'utilisateur des différentes commandes et des différents affichages du module 10. D'autre part, ces fuites de lumières dégradent la perception qualitative de ce type d'installation tactile vis-à-vis des utilisateurs.

Dans ce contexte, la présente invention vise à résoudre au moins un des inconvénients précédemment mentionnés.

A cette fin l'invention propose un module de commande et d'affichage selon la revendication 1.

Grâce à l'invention, le faisceau lumineux de fuite se propageant à l'intérieur de la plaque transparente du module est limité voire supprimé par la limitation ou la suppression des rayons incidents arrivant sur la plaque transparente avec un angle d'incident induisant une réflexion partielle ou totale à l'intérieur de la plaque transparente de la dalle tactile. Les moyens aptes à limiter les rayons sont positionnés entre la source de lumière et la dalle tactile permettent ainsi de traiter le phénomène en amont de la plaque transparente.

Les moyens aptes à limiter l'énergie lumineuse parasite permettent toutefois de disposer d'une lumière suffisamment homogène et diffuse pour permettre l'éclairage d'une zone de commande du module de commande et d'affichage.

Ainsi, le module de commande et d'affichage selon l'invention permet de s'affranchir du phénomène de fuite de lumière dans la plaque transparente occasionnée par l'utilisation d'une source de lumière diffuse et par la présence d'impureté et/ou de défauts sur la plaque lumineuse

L'aspect qualitatif perçu par l'utilisateur de ce type de module de commande et d'affichage de véhicule automobile est alors augmenté par rapport aux modules existant.

Outre les caractéristiques principales qui viennent d'être mentionnées dans le paragraphe précédent, le module de commande et d'affichage selon l'invention, peut présenter une ou plusieurs caractéristiques supplémentaires ci-dessous, considérées individuellement ou selon toutes les combinaisons techniquement possibles :

- les moyens sont aptes à minimiser la quantité d'énergie lumineuse parasite, arrivant à la surface de ladite face inférieure de ladite plaque transparente (34), avec un angle d'incidence supérieur ou égale à l'angle critique défini par la relation suivante :

$$\alpha_{\lim} = \arcsin(n_2 . \sin(\arcsin \frac{n_1}{n_2})),$$

avec :

- $n_1$ l'indice de réfraction du milieu dans lequel se propage le rayon incident ;
- $n_2$ l'indice de réfraction du milieu dans lequel se propage le rayon réfracté et dans lequel il y a réflexion totale :

  - $\alpha_{\lim}$ l'angle limite du rayon incident pour lequel il y a réflexion totale à l'intérieur du milieu dans lequel se propage le rayon réfracté.

- lesdits moyens sont formés par un élément transparent comportant une section prismatique ;
- lesdits moyens sont formés par deux éléments transparent superposés l'un à l'autre ;
- lesdits moyens sont formés par un premier élément transparent comportant une section prismatique et par un deuxième élément transparent superposé au premier élément transparent et comportant une section prismatique orientée selon un plan perpendiculaire à ladite section prismatique dudit premier élément transparent ;
- lesdits moyens sont formés par au moins un élément transparent incorporant une pluralité de lames fixes inclinées par rapport à la normale de ladite source lumineuse ;
- ladite source lumineuse est une source électroluminescente et/ou un, écran d'affichage ;
- ladite plaque transparente constitue un élément d'une dalle tactile ;
- ladite plaque transparente est en verre et/ou en matière plastique ;
- ledit module comporte un moyen de masquage rendant opaque au moins une partie de ladite plaque transparente (34) et comportant au moins une zone transparente apte à être éclairée par ladite source lumineuse, ledit moyen de masquage étant placé au dessus de ladite plaque transparente.

D'autres caractéristiques et avantages de l'invention ressortiront clairement de la description qui en est donnée ci-dessous, à titre indicatif et nullement limitatif, en référence aux différentes figures annexées :

- la figure 1a illustre une vue schématique de face d'un module de commande et d'affichage de véhicule automobile connue ;
- la figure 1b illustre une vue schématique en coupe selon un plan A-A du module de commande et d'affichage illustrée à la figure 1a ;

- la figure 2 illustre une vue schématique en coupe d'un premier exemple de réalisation d'un module de commande et d'affichage de véhicule automobile selon l'invention ;
- la figure 3 illustre une vue schématique en coupe d'un second exemple de réalisation d'un module de commande et d'affichage de véhicule automobile selon l'invention.

*Description des formes de réalisation préférées de l'invention*

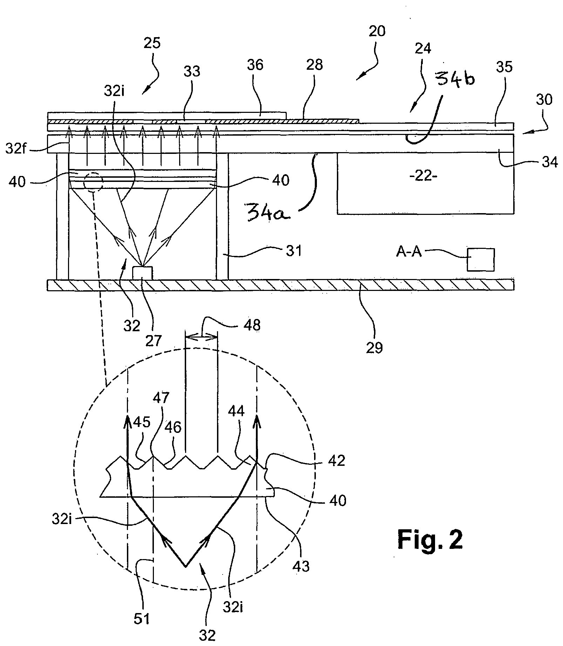

Les éléments identiques, par structure ou par fonction, apparaissant sur différentes figures conservent, sauf précision contraire, les mêmes références.
Les figures 1a et 1b ont déjà été décrites précédemment en référence à la présentation générale de l'invention.
En référence à la figure 2, un module de commande et d'affichage 20 de véhicule automobile selon l'invention comporte une dalle tactile transparente 30 comportant une zone de commande tactile 25 rétroéclairée par une source lumineuse 27 pour la saisie de commande par un utilisateur par de simples contacts avec la dalle tactile 30, et un boîtier (non représenté) dans lequel sont logés la dalle tactile 30 et la source lumineuse 27.
Le module de commande et d'affichage 20 est destiné à être logé dans un tableau de bord de véhicule automobile, permettant ainsi à un utilisateur d'interagir facilement avec le module par contact tactile.
La source lumineuse 27 diffuse un faisceau lumineux diffus 32, par exemple par une ou plusieurs diodes électroluminescentes (DEL en abrégé) implantées dans un support de type carte électronique 29, le faisceau 32 étant guidé dans une boîte à lumière 31.
Le rétroéclairage de la zone de commande tactile 25 permet de simuler un bouton de commande pouvant être visualisé aussi bien en conduite de jour qu'en conduite de nuit.
A cet effet, le module 20 comporte un film opaque 28 positionné sur la dalle tactile 30 et étendu sur au moins une partie de la dalle tactile 30, notamment au niveau de la zone de commande tactile 25. Le film opaque 28 comporte des pictogrammes 33, transparents ou translucides positionnés au niveau de la zone de commande tactile 25 et préférentiellement en regard de la source lumineuse 27, lesdits pictogrammes 33 transparents étant aptes à laisser passer le faisceau de lumière 32 émis par la source lumineuse 27.
De façon classique, le module 20 peut également comporter un écran d'affichage 22, pour l'affichage des données d'information ou de commande, la dalle tactile transparente 30 recouvrant l'écran d'affichage 22 et présentant une deuxième surface de commande 24 pour la saisie de commande par un utilisateur par de simples contacts avec l'écran.
L'écran d'affichage 22 est par exemple un écran TFT (utilisant la technologie de couches minces de transistor ou « Thin Film Transistor » en langue anglaise).

La dalle tactile 30 est une dalle transparente pouvant être de technologie résistive, capacitive, infrarouge, FTIR (pour Frustrated Total Internai Reflection en langue anglaise), NFI (pour Near Field Imaging en langue anglaise), à jauges de contrainte, à ondes de surface, à partir du moment où la dalle est apte à guider la lumière dans son épaisseur.

Quelle que soit la technologie de la dalle tactile utilisée, la dalle tactile 30 permet de déterminer les coordonnées du point où l'utilisateur appuie avec son doigt sur la surface de commande 24, 25 de la dalle 30. Le déplacement ou l'appui du doigt d'un utilisateur provoque la création d'un signal variant avec la localisation et le déplacement de son doigt au contact de la surface tactile de la dalle 30.

Selon l'exemple de réalisation illustré à la figure 2, la dalle tactile 30 est une dalle de type résistive formée par une plaque de verre 34 dont la surface est conductrice, recouverte par un film plastique 35 dont la sous face est conductrice. Les deux couches 34, 35 sont maintenues distantes l'une de l'autre par des cales d'espacement (non représentées).

Le module 20 peut également comporter de façon optionnelle une couche supplémentaire de protection 36 en surface, tel qu'un film coloré, fumé, et/ou anti-tireflet, le film antireflet permettant de limiter les effets de brillance ainsi que les empreintes de traces de doigts sur le module de commande et d'affichage 20.

La source de lumière 27 étant diffuse, elle forme un large faisceau de rayons lumineux 32 avec notamment des rayons lumineux de forte inclinaison par rapport à la normale de la source lumineuse 27.

Le module 20 selon l'invention comporte des moyens aptes à limiter voire à supprimer les rayons lumineux arrivant sur la dalle 30 avec un angle d'incidence induisant une réflexion totale ou partielle à l'intérieur de la dalle tactile.

Selon un premier exemple de réalisation illustré à la figure 2, ces moyens sont formés par un premier et un deuxième moyen d'orientation 40 du flux lumineux 32. Les moyens d'orientation 40 permettent de laisser passer le flux lumineux 32 tout en modifiant la direction de ce flux lumineux 32 entre l'entrée la sortie des moyens d'orientation 40. Plus précisément, les moyens d'orientation 40 reçoivent le flux lumineux 32 dans une multiplicité de directions, symbolisées par les rayons 32i, et dirigent ce flux lumineux de sorte que les rayons lumineux sortant 32f des moyens d'orientation 40 soient essentiellement parallèles entre eux et parallèle à la normale de la source lumineuse 27.

Ces moyens d'orientation 40 sont placés au moins au droit des pictogrammes 33 et de la zone de commande tactile 25, de sorte que les rayons atteignant cette zone traversent ces moyens d'orientation 40.

Ces moyens d'orientation 40 prennent la forme d'un élément transparent pouvant être une plaque rigide solidarisée sur la boîte à lumière 31 ou encore un film flexible tendu entre les parois de la boîte à lumière 31.

Les moyens d'orientation 40 présentent une première face 42 orientée vers la dalle tactile 30 et une seconde face 43 orientée vers la source lumineuse 27. La seconde face 43 est une surface lisse alors que la première face 42 présente une section prismatique. A cet effet, la première face 42 présente une pluralité de dents 44, chacune formée par un premier méplat 45 et par un deuxième méplat 46 se rejoignant à l'une de leur extrémité pour former une crête 47. Chaque méplat 45, 46 est incliné à 45° par rapport à une bissectrice passant par la crête 47, la bissectrice étant représentée par un trait référencé 51 sur la vue en détails de la figure 2. Ces premiers et deuxièmes méplats 45, 46 forment alors un ensemble à 90° au niveau de la crête 47 et sont par ailleurs inclinés à 45° par rapport au plan défini par la seconde face 43.

L'angle d'inclinaison des méplats est donné à titre indicatif. L'angle d'inclinaison de 45° permet d'avoir en sorti des rayons sensiblement parallèles entre eux et à la normale de la source lumineuse 27.

En revanche, l'angle d'inclinaison des méplats n'est pas limité au mode de réalisation qui vient d'être décrit. L'angle d'inclinaison peut être différent à condition qu'il permette une réorientation des rayons incidents arrivant sur la dalle tactile 30 de manière à limiter, voire à supprimer, le phénomène de réflexion partielle ou totale à l'intérieur de la dalle tactile 30 transparente. Avantageusement, l'angle d'inclinaison des méplats est défini de manière à limiter ou à supprimer les rayons incidents arrivant sur la dalle tactile 30 avec un angle d'incidence supérieur à un angle limite $\alpha_{lim}$ pour lequel il y aura réflexion totale du rayon lumineux à l'intérieur de la dalle tactile 30, l'angle limite étant défini par la relation suivante :

$$\alpha_{lim} = \arcsin(n_2 . \sin(\arcsin \frac{n_1}{n_2}),$$

avec :

- $n_1$ l'indice de réfraction du milieu dans lequel se propage le rayon incident ;
- $n_2$ l'indice de réfraction du milieu dans lequel se propage le rayon réfracté et dans lequel il y a réflexion totale :

  - $\alpha_{lim}$ l'angle limite du rayon incident pour lequel il y a réflexion totale à l'intérieur du milieu dans lequel se propage le rayon réfracté.

Un écart entre chaque crête 47 définit un pas 48 de dents, par exemple de l'ordre du millimètre, ce pas 48 étant avantageusement régulier de manière à maintenir un faisceau lumineux homogène sur toute la surface du pictogramme 33.

Les moyens d'orientation 40 ont pour effet de rediriger ou de re-collimater les rayons incidents 32i. Cet effet est particulièrement illustré dans la vue détaillée de la figure 2. Les rayons incidents 32i pénètrent à l'intérieur des moyens 40 de manière inclinée et ressort de ce dernier essentiellement parallèle les uns aux autres.

Selon l'exemple de réalisation particulièrement avantageux illustré à la figure 2, le module 20 comporte deux moyens d'orientation 40 superposés l'un au dessus de l'autre. Les deux moyens d'orientation 40 s'étendent selon deux plans distincts et parallèles. Les deux moyens d'orientation 40 sont orientés de sorte que les crêtes 47 d'un premier moyen d'orientation 40 s'étendent perpendiculairement aux crêtes 47 d'un deuxième moyen d'orientation. Ainsi, le premier moyen d'orientation 40 comporte une section prismatique dans le plan A-A représenté à la figure 2, et le second moyen d'orientation 40 comporte une section prismatique dans un plan perpendiculaire au plan A-A. Les deux moyens d'orientation 40 superposés permettent ainsi de réorienter le faisceau lumineux 32 quelle que soit l'orientation des rayons lumineux 32i et permettent de limiter la propagation des rayons lumineux à l'intérieur de la dalle tactile 30 par réflexion partielle ou totale.

Selon une variante de réalisation, le module de commande et d'affichage peut également ne comporter qu'un seul moyen d'orientation 40 afin de limiter la propagation des rayons lumineux à l'intérieur de la dalle tactile 30 selon une unique direction.

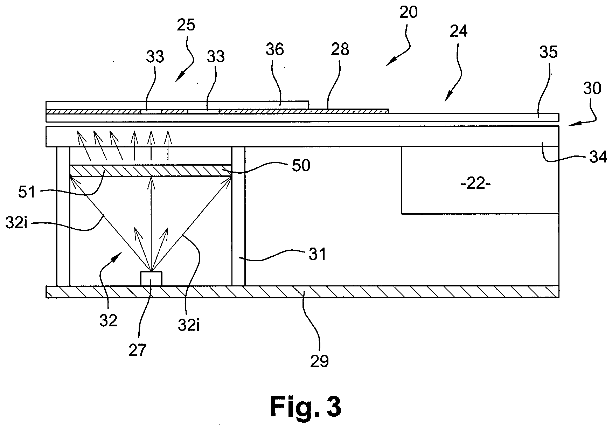

Selon un deuxième exemple de réalisation illustré à la figure 3, les moyens aptes à limiter les rayons lumineux 32i arrivant sur la dalle tactile 30 avec un angle d'incidence induisant une réflexion partielle ou totale à l'intérieur de la dalle tactile 30 sont formés par un élément en matière transparente 50 intégrant des volets ou des lames opaques 51 orientés selon une direction déterminée.

L'élément transparent à volets opaque 50 peut être une plaque rigide solidarisée sur la boîte à lumière 31 ou encore un film flexible tendu entre les parois de la boîte à lumière 31.

L'élément 50 permet de « filtrer » le flux lumineux diffus 32 en ne laissant passer qu'une partie du flux lumineux émis par la source de lumière 27. Les rayons lumineux 32i avec une forte incidence sont ainsi bloqués par les volets opaques. L'orientation et l'espacement longitudinal des volets opaques 51 à l'intérieur de l'élément transparent 50 permettent de définir la quantité d'énergie lumineuse traversant l'élément transparent 50 ainsi que l'orientation des rayons lumineux transmis.

Tel que représenté à la figure 3, l'élément 50 permet de bloquer les rayons incidents avec une forte incidence qui induirait une propagation à l'intérieur de la dalle tactile vers l'écran d'affichage 22. Pour limiter voire supprimer une propagation lumineuse à l'intérieur de la dalle tactile 30 selon un sens opposé, il est alors nécessaire de positionner un second élément transparent 50 au dessus ou en dessous du premier élément 50, de sorte que les deux éléments 50 se superposent, le deuxième élément 50 comportant des lames orientés selon une direction différente du premier élément 50 L'élément transparent 50 est également placé au droit des pictogrammes 33 et de la zone de commande tactile 25, de sorte que l'ensemble des rayons atteignant cette zone traverse l'élément transparent 50 filtrant les rayons incidents non désirés.

L'invention a été particulièrement décrite avec une dalle de technologie résistive ; toutefois, l'invention est également applicable à d'autres technologies de dalle tactile, telles que des dalles capacitives.

L'invention a été particulièrement décrite avec une dalle tactile formée par une plaque transparente en verre ; toutefois, l'invention est également applicable avec une toute dalle tactile formée par une plaque transparente, quel que soit le matériau de la plaque transparente utilisé.

L'invention a été particulièrement décrite en prenant en compte un faisceau lumineux d'une source lumineuse de type LED ; toutefois, la source lumineuse peut également être un écran d'affichage éclairant la dalle tactile, ou encore tout autre type de source lumineuse émettant un flux lumineux en direction d'une dalle tactile transparente.

## Revendications

1. Module de commande et d'affichage (20) comportant :

   - une plaque (34) de matière transparente comportant une face supérieure (34b) et une face inférieure (34a) ;
   - une source de lumière (22, 27) apte à émettre un faisceau lumineux (32) et à éclairer ladite face inférieure (34a) de ladite plaque transparente (34) ;
   - des moyens (40, 50) positionnés entre ladite plaque transparente (34) et ladite source de lumière (22, 27) aptes à minimiser la quantité d'énergie lumineuse parasite provenant de ladite source lumineuse (22, 27) pouvant induire un flux lumineux de fuite par réflexion du flux lumineux dans l'épaisseur de ladite plaque transparente (34), et lesdits moyens (40) sont des moyens aptes à collimater le flux lumineux (32) provenant de ladite source lumineuse (22, 27) de manière à obtenir des rayons lumineux parallèles les uns aux autres, ledit module étant **caractérisé en ce qu'**il comporte un écran d'affichage (22) recouvert par ladite face inférieure (34a).

2. Module de commande et d'affichage (20) selon la revendication précédente **caractérisé en ce que** les moyens (40, 50) sont aptes à minimiser la quantité d'énergie lumineuse parasite, arrivant à la surface de ladite face inférieure (34a) de ladite plaque transparente (34), avec un angle d'incidence supérieur ou égale à l'angle critique défini par la relation suivante :

$$\alpha_{\lim} = \arcsin(n_2.\sin(\arcsin\frac{n_1}{n_2})),$$

avec :

- $n_1$ l'indice de réfraction du milieu dans lequel se propage le rayon incident ;
- $n_2$ l'indice de réfraction du milieu dans lequel se propage le rayon réfracté et dans lequel il y a réflexion totale :

- $\alpha_{\lim}$ l'angle limite du rayon incident pour lequel il y a réflexion totale à l'intérieur du milieu dans lequel se propage le rayon réfracté.

3. Module de commande et d'affichage (20) selon l'une des revendications précédentes **caractérisé en ce que** lesdits moyens sont formés par un élément transparent (40) comportant une section prismatique.

4. Module de commande et d'affichage (20) selon l'une des revendications 1 à 2 **caractérisé en ce que** lesdits moyens sont formés par deux éléments transparent (40) superposés l'un à l'autre.

5. Module de commande et d'affichage (20) selon la revendication 4 **caractérisé en ce que** lesdits moyens sont formés par un premier élément transparent (40) comportant une section prismatique et par un deuxième élément transparent (40) superposé au premier élément transparent (40) et comportant une section prismatique orientée selon un plan perpendiculaire à ladite section prismatique dudit premier élément transparent (40).

6. Module de commande et d'affichage (20) selon l'une des revendications 1 à 2 **caractérisé en ce que** lesdits moyens (50) sont formés par au moins un élément transparent incorporant une pluralité de lames fixes inclinées par rapport à la normale de ladite source lumineuse (27).

7. Module de commande et d'affichage (20) selon l'une des revendications 1 à 6 **caractérisé en ce que** ladite source lumineuse est une source électroluminescente (27) et/ou un écran d'affichage (22).

8. Module de commande et d'affichage (20) selon l'une des revendications 1 à 7 **caractérisé en ce que** ladite plaque transparente (34) constitue un élément d'une dalle tactile (30).

9. Module de commande et d'affichage (20) selon l'une des revendications 1 à 8 **caractérisé en ce que** ladite plaque transparente (34) est en verre et/ou en matière plastique

10. Module de commande et d'affichage (20) selon l'une des revendications 1 à 9 **caractérisé en ce qu'**il comporte un moyen de masquage (28) rendant opaque au moins une partie de ladite plaque transparente (34) et comportant au moins une zone transparente (33) apte à être éclairée par ladite source lumineuse (22, 27), ledit moyen de masquage (28) étant placé au dessus de ladite plaque transparente (34) :

**Patentansprüche**

1. Steuer- und Anzeigemodul (20), welches aufweist:

- eine Platte (34) aus durchsichtigem Material, die eine Oberseite (34b) und eine Unterseite (34a) aufweist;
- eine Lichtquelle (22, 27), die in der Lage ist, ein Lichtbündel (32) auszusenden und die Unterseite (34a) der durchsichtigen Platte (34) zu beleuchten;
- Mittel (40, 50), die zwischen der durchsichtigen Platte (34) und der Lichtquelle (22, 27) positioniert sind und in der Lage sind, die von der Lichtquelle (22, 27) stammende Menge an Stör-Lichtenergie zu minimieren, die durch Reflexion des Lichtstroms in der Dicke der durchsichtigen Platte (34) einen Lecklichtstrom hervorrufen kann, und wobei die Mittel (40) Mittel sind, die in der Lage sind, den von der Lichtquelle (22, 27) stammenden Lichtstrom (32) zu kollimieren, so dass zueinander parallele Lichtstrahlen erhalten werden, wobei das Modul **dadurch gekennzeichnet ist, dass** es einen Anzeigenbildschirm (22) aufweist, der von der Unterseite (34a) bedeckt wird.

2. Steuer- und Anzeigemodul (20) nach dem vorhergehenden Anspruch, **dadurch gekennzeichnet, dass** die Mittel (40, 50) in der Lage sind, die Menge an Stör-Lichtenergie zu minimieren, die an der Oberfläche der Unterseite (34a) der durchsichtigen Platte (34) mit einem Einfallswinkel ankommt, der größer oder gleich dem durch die folgende Beziehung definierten kritischen Winkel ist:

$$\alpha_{\lim} = \arcsin(n_2.\sin(\arcsin\frac{n_1}{n_2})),$$

wobei:

- $n_1$ der Brechungsindex des Mediums ist, in dem sich der einfallende Strahl ausbreitet;
- $n_2$ der Brechungsindex des Mediums ist, in dem sich der gebrochene Strahl ausbreitet und in dem Totalreflexion vorliegt;
- $\alpha_{lim}$ der Grenzwinkel des einfallenden Strahls ist, für welchen Totalreflexion im Inneren des Mediums vorliegt, in dem sich der gebrochene Strahl ausbreitet.

3. Steuer- und Anzeigemodul (20) nach einem der vorhergehenden Ansprüche, **dadurch gekennzeichnet, dass** die Mittel von einem durchsichtigen Element (40) gebildet werden, das einen prismatischen Querschnitt aufweist.

4. Steuer- und Anzeigemodul (20) nach einem der Ansprüche 1 bis 2, **dadurch gekennzeichnet, dass** die Mittel von zwei durchsichtigen Elementen (40) gebildet werden, die übereinanderliegend angeordnet sind.

5. Steuer- und Anzeigemodul (20) nach Anspruch 4, **dadurch gekennzeichnet, dass** die Mittel von einem ersten durchsichtigen Element (40) gebildet werden, das einen prismatischen Querschnitt aufweist, und von einem zweiten durchsichtigen Element (40), das über dem ersten durchsichtigen Element (40) liegend angeordnet ist und einen prismatischen Querschnitt aufweist, der entlang einer Ebene ausgerichtet ist, die zu dem prismatischen Querschnitt des ersten durchsichtigen Elements (40) senkrecht ist.

6. Steuer- und Anzeigemodul (20) nach einem der Ansprüche 1 bis 2, **dadurch gekennzeichnet, dass** die Mittel (50) von wenigstens einem durchsichtigen Element gebildet werden, das eine Vielzahl von festen Lamellen enthält, die in Bezug auf die Normale der Lichtquelle (27) geneigt sind.

7. Steuer- und Anzeigemodul (20) nach einem der Ansprüche 1 bis 6, **dadurch gekennzeichnet, dass** die Lichtquelle eine elektrolumineszente Quelle (27) und/oder ein Anzeigebildschirm (22) ist.

8. Steuer- und Anzeigemodul (20) nach einem der Ansprüche 1 bis 7, **dadurch gekennzeichnet, dass** die durchsichtige Platte (34) ein Element eines Touch-Panels (30) darstellt.

9. Steuer- und Anzeigemodul (20) nach einem der Ansprüche 1 bis 8, **dadurch gekennzeichnet, dass** die durchsichtige Platte (34) aus Glas und/oder aus Kunststoff besteht.

10. Steuer- und Anzeigemodul (20) nach einem der Ansprüche 1 bis 9, **dadurch gekennzeichnet, dass** es ein Maskierungsmittel (28) aufweist, das wenigstens einen Teil der durchsichtigen Platte (34) undurchsichtig macht und wenigstens einen durchsichtigen Bereich (33) aufweist, der dafür ausgelegt ist, von der Lichtquelle (22, 27) beleuchtet zu werden, wobei das Maskierungsmittel (28) oberhalb der durchsichtigen Platte (34) angeordnet ist.

**Claims**

1. Control and display module (20) comprising:

   - a sheet (34) of transparent material comprising an upper face (34b) and a lower face (34a);
   - a light source (22, 27) able to emit a light beam (32) and to illuminate said lower face (34a) of said transparent sheet (34);
   - means (40, 50) positioned between said transparent sheet (34) and said light source (22, 27), which means are able to minimize the amount of parasitic light energy originating from said light source (22, 27) able to induce a leakage light flux by reflection of the light flux in the thickness of said transparent sheet (34), and said means (40) being means able to collimate the light flux (32) originating from said light source (22, 27) so as to obtain light rays that are parallel to one another, said module being **characterized in that** it comprises a display screen (22) covered by said lower face (34a).

2. Control and display module (20) according to the preceding claim, **characterized in that** the means (40, 50) are able to minimize the amount of parasitic light energy arriving at the surface of said lower face (34a) of said transparent sheet (34), with an angle of incidence larger than or equal to the critical angle defined by the following relationship:

$$\alpha_{lim} = arcsin\left(n_2 . sin\left(arcsin\frac{n_1}{n_2}\right)\right),$$

with:

   - $n_1$ the refractive index of the medium through which the incident ray propagates;
   - $n_2$ the refractive index of the medium through which the refracted ray propagates and in which total reflection occurs;
   - $\alpha_{lim}$ the limiting incident-ray angle for which total reflection occurs in the interior of the medium through which the refracted ray propagates.

3. Control and display module (20) according to one of the preceding claims, **characterized in that** said means are formed by a transparent element (40) comprising a prismatic section.

4. Control and display module (20) according to one of Claims 1 to 2, **characterized in that** said means are formed by two transparent elements (40) that are superposed one on the other.

5. Control and display module (20) according to Claim 4, **characterized in that** said means are formed by a first transparent element (40) comprising a prismatic section and by a second transparent element (40) that is superposed on the first transparent element (40) and that comprises a prismatic section that is oriented in a plane perpendicular to said prismatic section of said first transparent element (40).

6. Control and display module (20) according to one of Claims 1 to 2, **characterized in that** said means (50) are formed by at least one transparent element incorporating a plurality of fixed plates that are inclined with respect to the normal to said light source (27).

7. Control and display module (20) according to one of Claims 1 to 6, **characterized in that** said light source is an electroluminescent source (27) and/or a display screen (22).

8. Control and display module (20) according to one of Claims 1 to 7, **characterized in that** said transparent sheet (34) forms an element of a touch panel (30).

9. Control and display module (20) according to one of Claims 1 to 8, **characterized in that** said transparent sheet (34) is made of glass and/or of plastic.

10. Control and display module (20) according to one of Claims 1 to 9, **characterized in that** it comprises a masking means (28) that makes at least some of said transparent sheet (34) opaque and that comprises at least one transparent zone (33) that is able to be illuminated by said light source (22, 27), said masking means (28) being placed above said transparent sheet (34).

**Fig. 1a**

**Fig. 1b**

Fig. 2

**Fig. 3**

## RÉFÉRENCES CITÉES DANS LA DESCRIPTION

**Documents brevets cités dans la description**

- US 2010026703 A
- US 2005276448 A